(19)

Europäisches
Patentamt
European
Patent Office
Office européen
des brevets

(11) **EP 4 589 413 A1**

(12) **EUROPEAN PATENT APPLICATION**

(43) Date of publication:
**23.07.2025 Bulletin 2025/30**

(21) Application number: **25150929.5**

(22) Date of filing: **09.01.2025**

(51) International Patent Classification (IPC):
***G06F 3/01*** *(2006.01)*

(52) Cooperative Patent Classification (CPC):
**G06F 3/013**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.01.2024 FI 20245043**

(71) Applicant: **Nokia Technologies Oy
02610 Espoo (FI)**

(72) Inventors:
• **BIATEK, Thibaud
Troyes (FR)**
• **ILOLA, Lauri Aleksi
Tampere (FI)**
• **HE, Xuan
Massy (FR)**

(74) Representative: **Nokia EPO representatives
Nokia Technologies Oy
Karakaari 7
02610 Espoo (FI)**

(54) **A METHOD, AN APPARATUS AND A COMPUTER PROGRAM PRODUCT FOR EXTENDED
REALITY**

(57) A method, comprising: receiving parameters from a viewing apparatus for rendering one or more two-dimensional (2D) viewports from three-dimensional (3D) media content; receiving, in or along said parameters, one or more eye-blinking parameters from the viewing apparatus, wherein said one or more eye-blinking parameters of the viewing apparatus comprise at least one parameter indicating an eye-blinking status of an eye of a user of the viewing apparatus; determining, in response to said at least one parameter indicating the eye-blinking status having a value referring to a detected eye-blinking, at least one rendering optimization operation to be applied to the media content during the eye-blinking; and delivering the media content corresponding to said one or more 2D viewports to the viewing apparatus as rendered by said at least one rendering optimization operation and/or along an indication to the viewing apparatus to perform said at least one rendering optimization operation.

Receive parameters from a viewing apparatus for rendering one or more
2D viewports from 3D media content (300)

Receive one or more eye-blinking parameters from the viewing apparatus, wherein
said one or more eye-blinking parameters of the viewing apparatus comprise
at least one parameter indicating an eye-blinking status of an eye of a user of
the viewing apparatus (302)

Determine, in response to said at least one parameter indicating the eye-blinking status
having a value referring to a detected eye-blinking, at least one rendering optimization
operation to be applied to the media content during the eye-blinking (304)

Deliver the media content corresponding to said one or more 2D viewports
to the viewing apparatus as rendered by said at least one rendering optimization
operation and/or along an indication to the viewing apparatus to perform
said at least one rendering optimization operation (306)

Fig. 3

EP 4 589 413 A1

# EP 4 589 413 A1

**Description**

<u>Technical Field</u>

The present solution generally relates to extended reality (XR) applications.

<u>Background</u>

Extended reality (XR) is an umbrella term referring to augmented reality (AR), virtual reality (VR), and mixed reality (MR). The usage of extended reality (XR) applications may be divided, from the rendering perspective, into split-rendering and standalone rendering scenarios. In the split-rendering case, a part of the processing is offloaded to a remote server, thus lowering the device energy consumption or lightening the device form factor. In split-rendering scenarios, the device is continuously sending its pose information to the server and the server renders the scene for the requested pose and sends the rendered views back to the device (after being encoded and packaged appropriately). In standalone case, all the processing tasks are run locally in the headset, or in a tethered device attached to it, the connectivity being mainly used to download application assets from the server.

Eye-blinking information has been used in XR applications, for example to activate application control, such as to toggle a button or an action, or to foveated rendering, i.e. to allocate more rendering resources to a region of the frame where the user is looking at, and lower resources to peripheral vision.

An eye-blink duration is typically in the range of 100 - 400ms. Assuming video frames rendered at 50Hz, i.e. a video frame per every 20ms, at least a few (approx. 5 - 20) frames would be missed and not seen by the viewer during an eye blinking. Considering the large amount of computing resources used to render the scene at a high-enough frame rate and desired high visual quality with acceptable latency, transmitting and generating the missed video frames would consequently be a waste of resources.

<u>Summary</u>

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include methods, apparatus and computer readable media comprising a computer program stored therein, which are characterized by what is stated in the independent claims. Various embodiments are disclosed in the dependent claims.

According to a first aspect, there is provided a method comprising: receiving parameters from a viewing apparatus for rendering one or more two-dimensional (2D) viewports from three-dimensional (3D) media content; receiving, in or along said parameters, one or more eye-blinking parameters from the viewing apparatus, wherein said one or more eye-blinking parameters of the viewing apparatus comprise at least one parameter indicating an eye-blinking status of an eye of a user of the viewing apparatus; determining, in response to said at least one parameter indicating the eye-blinking status having a value referring to a detected eye-blinking, at least one rendering optimization operation to be applied to the media content during the eye-blinking; and delivering the media content corresponding to said one or more 2D viewports to the viewing apparatus as rendered by said at least one rendering optimization operation and/or along an indication to the viewing apparatus to perform said at least one rendering optimization operation.

According to a second aspect, there is provided a method comprising: determining parameters for rendering one or more two-dimensional (2D) viewports from three-dimensional (3D) media content; determining one or more eye-blinking parameters, wherein said one or more eye-blinking parameters comprise at least one parameter indicating an eye-blinking status of an eye of a user; determining, in response to said at least one parameter indicating the eye-blinking status having a value referring to a detected eye-blinking, at least one rendering optimization operation to be applied to the media content during the eye-blinking; and rendering the media content corresponding to said one or more 2D viewports according to said at least one rendering optimization operation.

An apparatus according to a third aspect comprises means for: receiving parameters from a viewing apparatus for rendering one or more two-dimensional (2D) viewports from three-dimensional (3D) media content; receiving, in or along said parameters, one or more eye-blinking parameters from the viewing apparatus, wherein said one or more eye-blinking parameters of the viewing apparatus comprise at least one parameter indicating an eye-blinking status of an eye of a user of the viewing apparatus; determining, in response to said at least one parameter indicating the eye-blinking status having a value referring to a detected eye-blinking, at least one rendering optimization operation to be applied to the media content during the eye-blinking; and delivering the media content corresponding to said one or more 2D viewports to the viewing apparatus as rendered by said at least one rendering optimization operation and/or along an indication to the viewing apparatus to perform said at least one rendering optimization operation.

An apparatus according to a fourth aspect comprises means for: determining parameters for rendering one or more two-dimensional (2D) viewports from three-dimensional (3D) media content; determining one or more eye-blinking parameters, wherein said one or more eye-blinking parameters comprise at least one parameter indicating an eye-blinking status of an eye of a user; determining, in response to said at least one parameter indicating the eye-blinking status having a value referring to a detected eye-blinking, at least one rendering optimization operation to be applied to the media content during the eye-blinking; and rendering the media content corresponding to said one or more 2D viewports according to said at least one rendering optimization operation.

According to an embodiment, the apparatus may comprise means for estimating an eye-blinking time window, during which said at least one rendering optimization operation is applicable.

According to an embodiment, said estimating is based on one or more of the following:

- a timestamp of capturing the received eye-blinking status;
- the current time;
- an internal processing delay of the apparatus;
- an average delay between the apparatus and the viewing apparatus.

According to an embodiment, the parameters for rendering the one or more 2D viewports from 3D media content comprise one or more of the following:

- pose information;
- viewport parameters;
- further information for determining the rendering of the one or more 2D viewports.

According to an embodiment, the value of the eye-blinking status parameter referring to the detected eye-blinking is derived from at least one of the following conditions:

- the eye of the user of the viewing apparatus is closing;
- the eye of the user of the viewing apparatus closed;
- the eye of the user of the viewing apparatus is opening;
- the eye of the user of the viewing apparatus is open.

According to an embodiment, the apparatus comprises means for applying said at least one rendering optimization operation to rendering of the media content, encoding of the media content and/or transmission of the media content.

According to an embodiment, the apparatus comprises means for applying said at least one rendering optimization operation to one or more of the following rendering operations of the media content:

- not render a frame;
- reuse a previous frame;
- render a new frame with lower quality;
- render a new frame using rasterization;
- render a new frame using lower level of detail textures;
- render a new frame without applying tessellation or geometry shading;
- render a new frame while disabling particle effects.

According to an embodiment, the apparatus comprises means for applying said at least one rendering optimization operation to one or more of the following encoding operations of the media content:

- encode a zero motion-vector or a residual frame based on the last frame sent;
- cancel encoding of a frame;
- apply variable frame rate encoding;
- encode a frame at a lower bitrate;
- encode a frame at a lower resolution than the corresponding rendered frame;
- encode an SEI message indicating that no frame was rendered.

According to an embodiment, the apparatus comprises means for applying said at least one rendering optimization operation to one or more of the following transmission operations of the media content:

- not transmit anything;
- transmit the encoded video frame and/or the SEI message;
- transmit an empty frame and/or a corresponding SEI message;
- retransmit a previously encoded frame;
- transmit a message indicating that nothing has been rendered due to eye-blinking status;
- attribute a lower transmission priority to the frame;
- transmit a message for the viewing apparatus about a transmission time of the next frame.

According to an embodiment, the apparatus comprises means for configuring said one or more eye-blinking parameters in a pose message.

According to an embodiment, the apparatus comprises means for configuring said one or more eye-blinking parameters in one or more data structures describing pose information according to 3GPP split-rendering.

According to an embodiment, the apparatus comprises means for creating statistics on user's eye status; and estimating, based on said statistics, an eye closing duration or the next eye blinking occurrence.

An apparatus according to a fifth aspect comprises at least one processor and at least one memory, said at least one memory stored with computer program code thereon, the at least one memory and the computer program code configured to, with the at least one processor, cause the apparatus at least to perform: receive parameters from a viewing apparatus for rendering one or more two-dimensional (2D) viewports from three-dimensional (3D) media content; receive, in or along said parameters, one or more eye-blinking parameters from the viewing apparatus, wherein said one or more eye-blinking parameters of the viewing apparatus comprise at least one parameter indicating an eye-blinking status of an eye of a user of the viewing apparatus; determine, in response to said at least one parameter indicating the eye-blinking status having a value referring to a detected eye-blinking, at least one rendering optimization operation to be applied to the media content during the eye-blinking; and deliver the media content corresponding to said one or more 2D viewports to the viewing apparatus as rendered by said at least one rendering optimization operation and/or along an indication to the viewing apparatus to perform said at least one rendering optimization operation.

An apparatus according to a sixth aspect comprises at least one processor and at least one memory, said at least one memory stored with computer program code thereon, the at least one memory and the computer program code configured to, with the at least one processor, cause the apparatus at least to perform: determine parameters for rendering one or more two-dimensional (2D) viewports from three-dimensional (3D) media content; determine one or more eye-blinking parameters, wherein said one or more eye-blinking parameters comprise at least one parameter indicating an eye-blinking status of an eye of a user; determine, in response to said at least one parameter indicating the eye-blinking status having a value referring to a detected eye-blinking, at least one rendering optimization operation to be applied to the media content during the eye-blinking; and render the media content corresponding to said one or more 2D viewports according to said at least one rendering optimization operation.

A method according to a seventh aspect comprises sending parameters to a rendering apparatus for rendering one or more two-dimensional (2D) viewports from three-dimensional (3D) media content; sending, in or along said instructions, one or more eye-blinking parameters to the rendering apparatus, wherein said one or more eye-blinking parameters comprise at least one parameter indicating an eye-blinking status of an eye of a user of the apparatus; and receiving the media content corresponding to said one or more 2D viewports from the rendering apparatus as rendered by at least one rendering optimization operation determined by said rendering apparatus and/or along an indication to perform said at least one rendering optimization operation.

An apparatus according to an eighth aspect comprises means for: sending parameters to a rendering apparatus for rendering one or more two-dimensional (2D) viewports from three-dimensional (3D) media content; sending, in or along said instructions, one or more eye-blinking parameters to the rendering apparatus, wherein said one or more eye-blinking parameters comprise at least one parameter indicating an eye-blinking status of an eye of a user of the apparatus; and receiving the media content corresponding to said one or more 2D viewports from the rendering apparatus as rendered by at least one rendering optimization operation determined by said rendering apparatus and/or along an indication to perform said at least one rendering optimization operation.

An apparatus according to a ninth aspect comprises at least one processor and at least one memory, said at least one memory stored with computer program code thereon, the at least one memory and the computer program code configured to, with the at least one processor, cause the apparatus at least to perform: send parameters to a rendering apparatus for rendering one or more two-dimensional (2D) viewports from three-dimensional (3D) media content; send, in or along said instructions, one or more eye-blinking parameters to the rendering apparatus, wherein said one or more eye-blinking parameters comprise at least one parameter indicating an eye-blinking status of an eye of a user of the apparatus; and receive the media content corresponding to said one or more 2D viewports from the rendering apparatus as rendered by at least one rendering optimization operation determined by said rendering apparatus and/or along an indication to perform said at least one rendering optimization operation.

Computer readable storage media according to further aspects comprise code for use by an apparatus, which when executed by a processor, causes the apparatus to perform the above methods.

Description of the Drawings

In the following, various embodiments will be described in more detail with reference to the appended drawings, in which

Fig. 1 shows an example of XR split rendering;
Fig. 2 shows an example of a split-rendering architecture according to a 3GPP specification;
Fig. 3 shows a flow chart of a method for addressing eye blinking according to an aspect;
Fig. 4 shows a flow chart of a method for addressing eye blinking according to another aspect;
Figs. 5a - 5c illustrate example scenarios where the eye-blinking time window may be utilized in rendering optimization operations; and
Fig. 6 shows a flow chart illustrating the decision-making process for adjusting rendering, encoding and transmission according to some embodiments; and
Fig. 7 shows a flow chart illustrating operation of a viewing device in split-rendering architecture according to yet another aspect.

Description of Example Embodiments

Extended reality (XR) is an umbrella term for different types of realities and refers to all real-and-virtual combined environments and human-machine interactions generated by computer technology and wearables. Different application domains of XR Applications include entertainment, healthcare, education, etc.

The usage of extended reality (XR) applications may be divided, from the rendering perspective, into split-rendering and standalone rendering scenarios. In the split-rendering case, a part of the processing is offloaded to a remote server, thus lowering the device energy consumption or lightening the device form factor. In split-rendering scenarios, the device is continuously sending its pose information to the server and the server renders the scene for the requested pose and sends the rendered views back to the device (after being encoded and packaged appropriately). In standalone case, all the processing tasks are run locally in the headset, or in a tethered device attached to it, the connectivity being mainly used to download application assets from the server.

XR covers augmented reality (AR), virtual reality (VR), and mixed reality (MR). In 3GPP TR 26.928 the terms virtual reality (VR), augmented reality (AR), mixed reality (MR), and XR are defined as follows:

Virtual reality (VR) is a rendered version of a delivered visual and audio scene. The rendering is designed to mimic the visual and audio sensory stimuli of the real world as naturally as possible to an observer or user as they move within the limits defined by the application. Virtual reality usually, but not necessarily, requires a user to wear a head mounted display (HMD), to completely replace the user's field of view with a simulated visual component, and to wear headphones, to provide the user with the accompanying audio. Some form of head and motion tracking of the user in VR is usually also necessary to allow the simulated visual and audio components to be updated in order to ensure that, from the user's perspective, items and sound sources remain consistent with the user's movements. Additional means to interact with the virtual reality simulation may be provided but are not strictly necessary.

Augmented reality (AR) is when a user is provided with additional information or artificially generated items or content overlaid upon their current environment. Such additional information or content will usually be visual and/or audible and their observation of their current environment may be direct, with no intermediate sensing, processing and rendering, or indirect, where their perception of their environment is relayed via sensors and may be enhanced or processed.

Mixed reality (MR) is an advanced form of AR where some virtual elements are inserted into the physical scene with the intent to provide the illusion that these elements are part of the real scene.

Extended reality (XR) refers to all real-and-virtual combined environments and human-machine interactions generated by computer technology and wearables. It includes representative forms such as AR, MR and VR and the areas interpolated among them. The levels of virtuality range from partially sensory inputs to fully immersive VR. A key aspect of XR is the extension of human experiences especially relating to the senses of existence (represented by VR) and the acquisition of cognition (represented by AR).

XR applications may rely on an XR engine. An XR engine may provide a middleware that abstracts the hardware and software functionalities. The XR engine may be a software-development environment designed for building XR experiences such as XR media streaming, games, and other XR applications. The core functionality of the XR engine may be the XR rendering engine for rendering two dimensions (2D) and three dimensions (3D) graphics.

The XR rendering engine may be built upon one or multiple rendering application programming interfaces (APIs) such as Direct3D, OpenGL, or Vulkan. The APIs may provide a software abstraction of the graphics processing unit (GPU).

The rendering may be performed according to four different rendering options:

- On an XR Device
- On an XR Tethered Device (i.e., a processing device attached to the XR Device)
- On an XR Server
- On an XR Device and an XR Server (i.e., split rendering-the rendering may be split between the XR server, which is used for the pre-rendering and the XR device for the final rendering).

The rendering option used may depend on the XR device capability, the load on the XR device as well as the XR server and/or current network conditions such as available bandwidth and latency. As an example, raster-based split rendering with pose correction may require a 100 Mbit/s downlink (DL) rate with a delay budget of 20 ms and a 500 kbit/s UL rate with a delay budget of 10 ms.

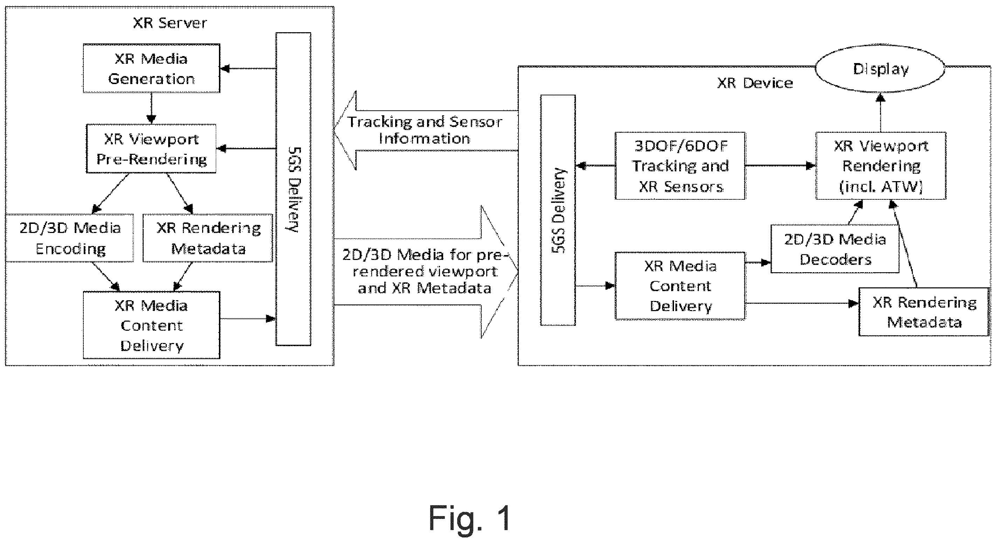

An example of split rendering is shown in Figure 1. An XR server may comprise an XR media generation module, an XR view port pre-rendering module, a 2D/3D media encoding module, an XR rendering metadata module, an XR media content module and/or a 5GS delivery module. An XR device may comprise a 5GS delivery module, a 3 degree of freedom (DOF)/6 DOF tracking and XR sensors module, an XR media content delivery module, a 2D/3D media decoders module, an XR rendering metadata module, a XR viewport rendering module and/or a display module. The XR device may provide tracking and sensor information to the XR server. The XR server may provide 2D/3D media for pre-rendered viewport and XR metadata.

The 3DoF may contain pitch, yaw and roll. The 6DoF may further add full translational movement along the x, y, and z axes.

The 3DoF and 6 DoF are defined in TR 26.928 as:

3DoF: Three rotational and un-limited movements around the X, Y and Z axes (respectively pitch, yaw and roll). A typical use case is a user sitting in a chair looking at 3D 360 VR content on an HMD.
6DoF: 3DoF with full translational movements along X, Y and Z axes. Beyond the 3DoF experience, it adds (i) moving up and down (elevating/heaving); (ii) moving left and right (strafing/swaying); and (iii) moving forward and backward (walking/surging). A typical use case is a user freely walking through 3D 360 VR content (physically or via dedicated user input means) displayed on an HMD.

An XR Space represents a virtual coordinate system with an origin that corresponds to a physical location. The world coordinate system is the coordinate system in which the virtual world is created. Coordinate systems are essential for operating in 3-dimensional virtual and real worlds for XR applications. A coordinate system is expected to be a rectangular Cartesian in which all axes are equally scaled.

An XR Pose describes a position and orientation in space relative to an XR Space. The position in the XR space is a 3D-vector representing the position within a space and relative to the origin defined by the (x,y,z) coordinates. The orientation in the XR space is a quaternion representing the orientation within a space and defined by a four-dimensional or homogeneous vector with (x,y,z,w) coordinates, with w being the real part of the quarternion and x, y and z the imaginary parts.

An XR device may be AR wearable glasses, head mounted displays (HMD), a standard smartphone, a tablet or other. The XR device may be either directly connected to the XR server or the XR server may also be placed in an edge cloud or a central cloud if the latency requirements allow this. For the edge cloud solution, the XR server may be located in a multi-access edge computing (MEC) environment as per ETSI MEC-Multi-access Edge Computing (MEC); Framework and Reference Architecture, in an edge application server (EAS) as per TS 23.558-Architectural Solutions for Enabling Edge Applications or as a spatial computing server (SCS) as per TR 26.928-Extended Reality (XR) in 5G.

Rendering images or videos for presentation on an XR device may require huge computational power and may be time consuming. This may be especially critical for battery-powered devices such as wireless glasses, smartphones, or tablets. On such XR devices only a limited augmentation is possible (e.g. virtual objects with a low number of textures instead of photo-realistic augmentation). Additional limitations of on-device rendering may be on multi-user environments as well as real-time XR experiences. These may be hardly possible without an XR server.

In contrast, remote rendering on an XR server may enable to do photo-realistic rendering, multi-user XR gaming experience as well as XR media conferences. The downside of using an XR server may be large delays and bandwidth limitations. Low delays may be required as an application may have to be able to react on fast movements of the person wearing or holding the XR device.

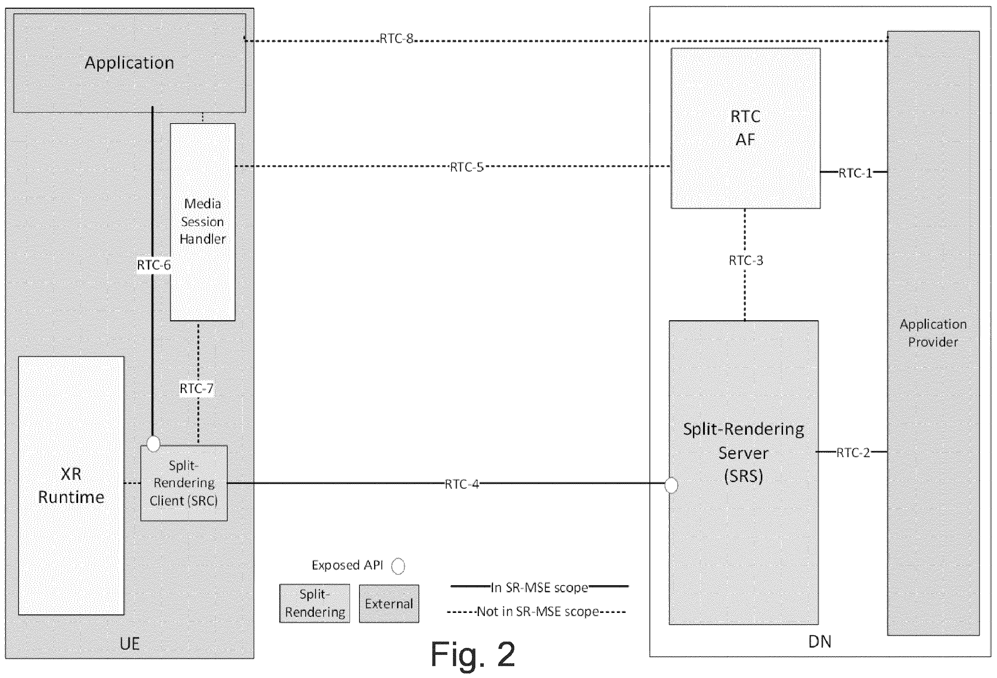

A split-rendering scenario is also defined in 3GPP TS 26.565, where a split-rendering reference architecture as illustrated in Figure 2 is depicted. The reference architecture may be implemented in various ways to create a media service enabler (MSE) for the split rendering.

The split-rendering architecture illustrated in Figure 2 comprises a terminal device (e.g. user equipment UE) implementing some of functions of the split-rendering architecture, whereas a plurality of functions of the split-rendering architecture are implemented in one or more network elements (DN, distributed network).

The split-rendering reference architecture may comprise the following functions:

- Split-Rendering Client (SRC) is responsible to acquire the UE media capabilities and negotiates with the Real-Time Communication Application Server (RTC AS) to agree on the split-rendering (SR) process at the RTC AS.
- Split-Rendering Server (SRS) is responsible for negotiation of SR session with SRC, monitoring the server's edge resource usage, and managing/running the split rendering process.
- Application Function (AF) is responsible for provisioning, QoS allocation, and edge resource discovery.
- Application Service Provider (AP) offers the service.
- Application running on UE.
- Media Session Handler (MSH) is the entity on UE that is responsible for the control plane communication with the AF.

In the split-rendering architecture illustrated in Figure 2, the 5G Application Providers (AP) provisions the split-rendering through a first Real-Time Communication interface (RTC-1). If the Application Service Provider is involved in the media delivery, the RTC-2 interface is used for this purpose. There may be communication between AF and SRS is through RTC-3 interface, which may include, for example, the EDGE-3 interface. The signalling, as well as the media delivery, between SRC and SRS is carried out though RTC-4 interface.

The AF may provide the split-rendering information to the Media Session Handler defined by RTC-5 interface, which defined more precisely in TS26.506. The SRC in the UE discovers the application through RTC-6 interface and handles the XR runtime; i.e the execution of the XR process displayed to the user. The SRC discovers the client media capabilities through the RTC-7 interface. The 5G Application and AP interact through RTC-8 interface.

In this case, the device (UE) is offloading rendering tasks to a remote server. The device is continuously sending its pose information to the server and the server renders the scene for the requested pose and sends the rendered view(s) back to the device. The view may consist of depth and texture information to support better pose correction on the device.

The current rendering and split-rendering architectures for XR, such as the split-rendering reference architecture defined in 3GPP TS 26.565, are designed to render a frame for a requested user's pose. To maximize the quality of experience for the user, a large amount of computing resources is used to render the scene at a high-enough frame rate and visual quality considering, for example, resolution, lighting and particle effects, video dynamic range, etc. If the infrastructure is sufficiently dimensioned, for example in terms of CPU/GPU capabilities, network throughput and latency, this should provide acceptable quality of experience.

An eye-blink duration of human is often in the range of 100 - 150ms, it but may sometimes extend up to 400ms. Assuming video frames rendered at 50Hz, i.e. a video frame per every 20ms, at least a few (approx. 5 - 20) frames would be missed and not seen by the viewer during an eye blinking. Moreover, an adult human is estimated to blink approximately 12 times per minute. Although the frequency and the duration of eye blinking may vary and depend on viewers' tiredness, some video frames would inevitably not be seen by viewers due to eye-blinking.

However, considering the large amount of computing resources used to render the scene at a high-enough frame rate and desired high visual quality with acceptable latency, transmitting and generating the missed video frames would consequently be a waste of resources.

Now an improved method for addressing eye blinking is introduced in order to at least alleviate the above problems.

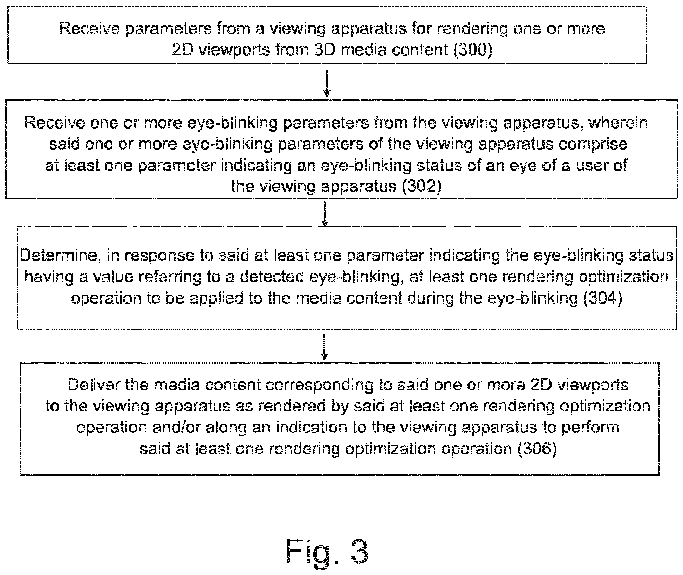

The method according to an aspect, as shown in Figure 3 and illustrating the operation of a rendering device, such as a Split-Rendering Server (SRS), comprises receiving (300) parameters from a viewing apparatus for rendering one or more two-dimensional (2D) viewports from three-dimensional (3D) media content; receiving (302), in or along said parameters, one or more eye-blinking parameters from the viewing apparatus, wherein said one or more eye-blinking parameters of the viewing apparatus comprise at least one parameter indicating an eye-blinking status of an eye of a user of the viewing apparatus; determining (304), in response to said at least one parameter indicating the eye-blinking status having a value referring to a detected eye-blinking, at least one rendering optimization operation to be applied to the media content during the eye-blinking; and delivering (306) the media content corresponding to said one or more 2D viewports to the viewing apparatus as rendered by said at least one rendering optimization operation and/or along an indication to the viewing apparatus to perform said at least one rendering optimization operation.

Thus, the rendering device, such as the SRS or a tethered apparatus connected to the viewing apparatus, receives parameters from the viewing apparatus, such as an HMD, for rendering one or more two-dimensional (2D) viewport(s) from three-dimensional (3D) media content. For example, a common viewport may be rendered for both eyes, or different (two) viewports may be rendered the left eye and the right eye, correspondingly. The rendering device further receives, in or along said parameters, eye-blinking parameters from the viewing apparatus. The eye-blinking parameters comprise at least a parameter indicating an eye-blinking status of an eye of a user of the viewing apparatus. The eye-blinking status may be continually updated by the viewing apparatus so as to reflect the real eye-blinking status of the eye of the user. If the eye-blinking status indicates that an eye-blinking is detected, the rendering device determines at least one rendering optimization operation to be applied to the media content during the eye-blinking. The rendering optimization operation may be carried out by the rendering device itself, in which case the rendered media content corresponding to said one or more 2D viewport(s) is delivered to the viewing apparatus. Alternatively or in addition, the rendering device may instruct the viewing apparatus to carry out at least one rendering optimization operation via an appropriate signaling.

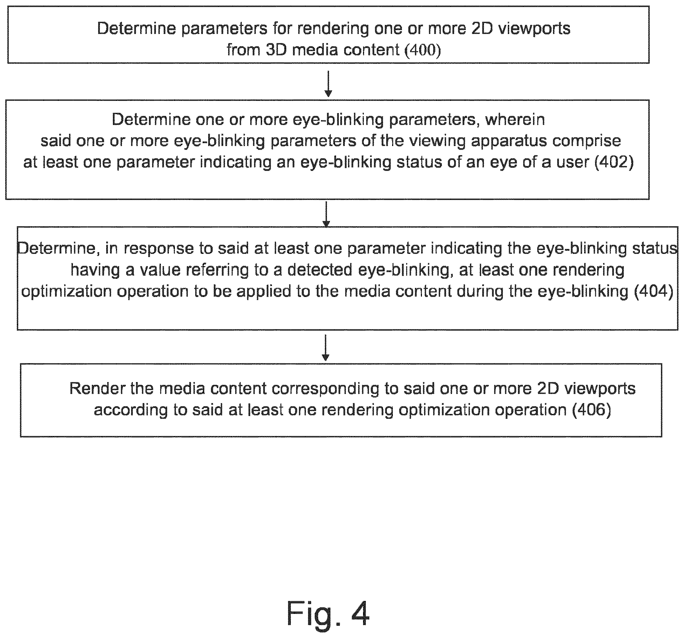

It is noted that the above method may likewise be implemented in the viewing apparatus, i.e. without a separate rendering device. In such case, the method comprises, as shown in Figure 4, determining (400) parameters for rendering one or more two-dimensional (2D) viewports from three-dimensional (3D) media content; determining (402) one or more eye-blinking parameters, wherein said one or more eye-blinking parameters comprise at least one parameter indicating an eye-blinking status of an eye of a user; determining (404), in response to said at least one parameter indicating the eye-blinking status having a value referring to a detected eye-blinking, at least one rendering optimization operation to be applied to the media content during the eye-blinking; and rendering (406) the media content corresponding to said one or more 2D viewports according to said at least one rendering optimization operation.

Thus, another aspect relates to a viewing apparatus, such as a UE or an HMD, configured to determine at least one rendering optimization operation to be applied to the media content during the eye-blinking. The above method may hence be implemented in a standalone XR scenario, as well.

According to an embodiment, the parameters for rendering the one or more 2D viewports from 3D media content comprise one or more of the following: pose information; viewport parameters; further information for determining the rendering of the one or more 2D viewports.

Thus, for carrying out the rendering of the one or more 2D viewport(s) from the 3D media content, parameters comprising preferably pose information and viewport parameters may be provided to the apparatus performing the rendering. Moreover, any further information for determining the rendering of the one or more 2D viewport(s) may be provided.

According to an embodiment, the value of the eye-blinking status parameter referring to the detected eye-blinking is derived from at least one of the following conditions:

- the eye of the user of the viewing apparatus is closing;
- the eye of the user of the viewing apparatus closed;
- the eye of the user of the viewing apparatus is opening;
- the eye of the user of the viewing apparatus is open.

Thus, at least four stages regarding the status of the eye-blinking may be distinguished: the eye is open, the eye is closing, the eye is closed, and the eye is opening. If the value of the eye-blinking status parameter indicates that the eye is open, no rendering optimization operations are immediately initiated. However, "eye is open" status may be utilized in predicting the moment when the value of the eye-blinking status parameter changes to "eye is closing", and thereby preparing the triggering of the at least one rendering optimization operation in advance. Regarding any other status of the eye-blinking, i.e. the eye is closing, the eye is closed, or the eye is opening, they may trigger the determining of the at least one rendering optimization operation to be applied to the media data during the eye-blinking.

According to an embodiment, the method comprises estimating an eye-blinking time window, during which said at least one rendering optimization operation is applicable.

Accordingly, a time window, referred to as an eye-blinking time window, during which said at least one rendering optimization operation can be applied is estimated. The eye-blinking time window refers to time available before the status of the eye-blinking changes again as the eye is open. Herein, the status of the eye-blinking, whether the eye is closing, the eye is closed, or the eye is opening, has naturally effect on an estimated eye blinking duration, and thereby on the length of the eye-blinking time window.

According to an embodiment, said estimating is based on one or more of the following:

- a timestamp of capturing the received eye-blinking status;
- the current time;
- an internal processing delay of the apparatus;
- an average delay between the apparatus and the viewing apparatus.

For estimating the length of the eye-blinking time window, at least the timestamp of when the received eye-blinking status was captured, the current time, the internal processing delay of the rendering apparatus and/or viewing apparatus and the average measured delay in a transmission between the rendering apparatus and the viewing apparatus may have effect on the length of the eye-blinking time window.

According to an embodiment, the method comprises creating statistics on user's eye status; and estimating, based on said statistics, an eye closing duration or the next eye blinking occurrence.

Hence, at least the eye status data of the user may be gathered in real-time and/or there may be history data about the user stored in the system (i.e. in the rendering apparatus and/or viewing apparatus or in an external device), whereupon user-specific statistics about the user's eye status may be created. Based on the statistics, for example, an eye closing duration or the next eye blinking occurrence of the user may be estimated and used, e.g. to adjust the eye-blinking time window.

The eye-blinking time window may be calculated, for example, as follows:

$$T_O = T_B - (t - t_P) - T_D$$

where $T_O$ is the eye-blinking time window duration, $T_B$ is the estimated eye blinking duration, $t$ is the current time, $t_P$ is the timestamp of the received pose and $T_D$ is the estimated downlink delay.

Alternatively, in the above formula, $T_B$ may be a function of the eye-blinking status (i.e. $T_B$(EyeStatus)) for estimating the remaining duration of the eye-blinking. Thereby, the various stages regarding the status of the eye-blinking (the eye is open, the eye is closing, the eye is closed, the eye is opening) may be utilized in estimating the remaining duration of the eye-blinking.

As a result, any data sent by the rendering apparatus during the $T_O$ window will be received by the viewing apparatus during the viewer's eye blinking. Thus, upon the eye-blinking status indicating that an eye-blinking is detected, the rendering apparatus can for the following period of $T_O$ (milli)seconds optimize its internal processes and transmission of data.

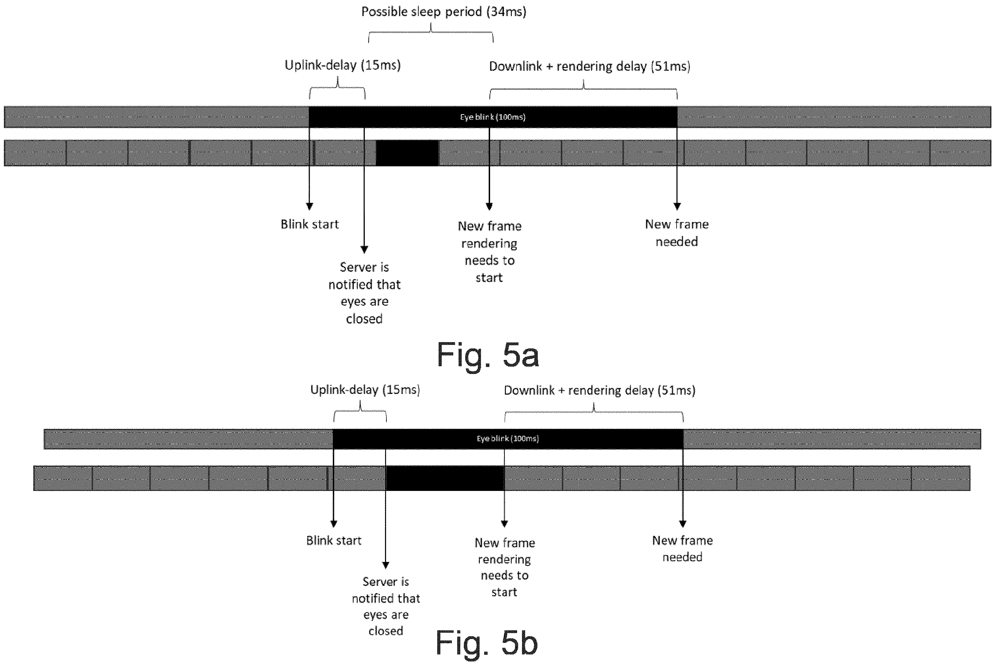

Figures 5a - 5c illustrate example scenarios where the eye-blinking time window may be utilized in rendering optimization operations during one or more frames. In the Figures, the upper line represents the timing of the eye-blinking time window and the various timing parameters affecting to it, and the lower line represents the corresponding timing of video frames. The dark sections in the lower line represent the timing during which the rendering optimization operations take place.

In the example of Figure 5a, the estimated eye blinking duration is 100ms. When the blink starts, the rendering apparatus, such as the server, receives a notification after the uplink delay of 15ms. Considering the sum of downlink and rendering delays (51ms in this example), the possible sleep period, i.e. the eye-blinking time window, is estimated to be 34ms. During this sleep period, and for this configuration, generating one complete frame can be omitted.

In the example of Figure 5b, the rendering apparatus, such as the server, receives a notification about the start of a blink at a time corresponding to a beginning of frame. Now depending on the estimated eye blinking duration and the frame rate, it may be possible to omit the generating of two consecutive frames, as illustrated in Figure 5b.

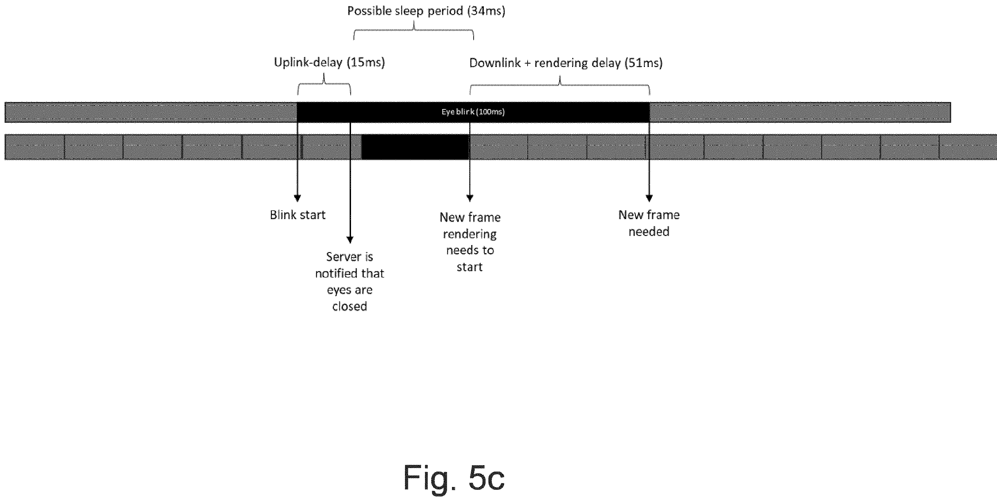

Figure 5c illustrates a further approach for rendering optimization operations in a situation where it is not possible to omit the generating of two consecutive frames, but instead variable frame rate encoding is applied to only deliver a frame aligned with the end of the eye blinking period. Again, 34ms of processing power can be saved.

According to an embodiment, the method comprises applying said at least one rendering optimization operation to rendering of the media data, encoding of the media data and/or transmission of the media data.

Thus, there are various stages of the processing chain, where the rendering optimization operation(s) may take place. It is naturally possible to use a plurality of rendering optimization operations in one or more stages of the processing chain.

Various operations can be triggered by the server, wherein at least some of the operations can be selected by the server as alternatives to each other. The operations may include at least the following:

- Receiving data from the network.
- Updating a 3D scene based on user's input.
- Rendering or pre-rendering of the 3D scene for a requested pose. This may include:

  - Vertex processing
  - Vertex post-processing
  - Rasterization
  - Fragment processing
  - Per-sample operation
  - Ray-tracing
  - Generation of particle effects
  - Selecting lower level-of-detail for 3D assets (LOD)

- Encoding of a rendered frame. This may include:

- Selecting a codec type

  ◦ JPEX-XS or still image coding applied to video
  ◦ H.264/AVC, H.265/HEVC, H.266/VVC

- Video pre-processing (denoising, tone mapping, down/up-sampling, etc.)
- Deciding on rate control parameter

  ◦ Frame/slice/tile bitrate allocation
  ◦ Frame/slice/tile type decision (I, P, B, GDR, ...)

- Running the encoding (R-D optimizations and psychovisual)

- Packaging of an encoded frame into a container. This may include

  - File format packaging, e.g. using ISOBMFFF
  - Encapsulation in MPEG2-TS packet
  - Encapsulation in RTP packet
  - Generation or update of DASH or HLS manifest, or SDP
  - Setting appropriate header parameters value (e.g. importance field in RTP header extension)

- Sending data to the network

The rendering apparatus may deploy multiple strategies to save resources and energy, for example, by adjusting one or more of the abovementioned operations.

According to an embodiment, the method comprises applying said at least one rendering optimization operation to one or more of the following rendering operations of the media data:

- not render a frame;
- reuse a previous frame;
- render a new frame with lower quality;
- render a new frame using rasterization;
- render a new frame using lower level of detail textures;
- render a new frame without applying tessellation or geometry shading;
- render a new frame while disabling particle effects.

Hence, the rendering apparatus may decide to not render the views requested during the eye-blinking window, reuse a previous frame instead of rendering a new frame, or render a new frame with reduced precision. For reduced precision, the frame may be rendered with lower quality using e.g. lower resolution or lower level-of-details (LOD). Moreover, rasterization may be used instead of ray-tracing, or generating various particle effects may be omitted to save processing resources.

According to an embodiment, the method comprises applying said at least one rendering optimization operation to one or more of the following encoding operations of the media data:

- encode a zero motion-vector or a residual frame based on the last frame sent;
- cancel encoding of a frame;
- apply variable frame rate encoding;
- encode a frame at a lower bitrate;
- encode a frame at a lower resolution than the corresponding rendered frame;
- encode an SEI message indicating that no frame was rendered.

Especially in remote or split rendering or for tethered device, savings in processing resources and caused delays can be achieved by simplifying the encoding of the frames during the eye-blinking, for example by applying any of the above operations.

According to an embodiment, the method comprises applying said at least one rendering optimization operation to one or more of the following transmission operations of the media data:

- not transmit anything;

- transmit the encoded video frame and/or the SEI message;
- transmit an empty frame and/or a corresponding SEI message;
- retransmit a previously encoded frame;
- transmit a message indicating that nothing has been rendered due to eye-blinking status;
- attribute a lower transmission priority to the frame;
- transmit a message for the viewing apparatus about a transmission time of the next frame.

In a similar manner to encoding operations, savings in processing resources and caused delays can be achieved especially in remote or split rendering or for tethered device by simplifying the transmission of the frames during the eye-blinking, for example by applying any of the above operations.

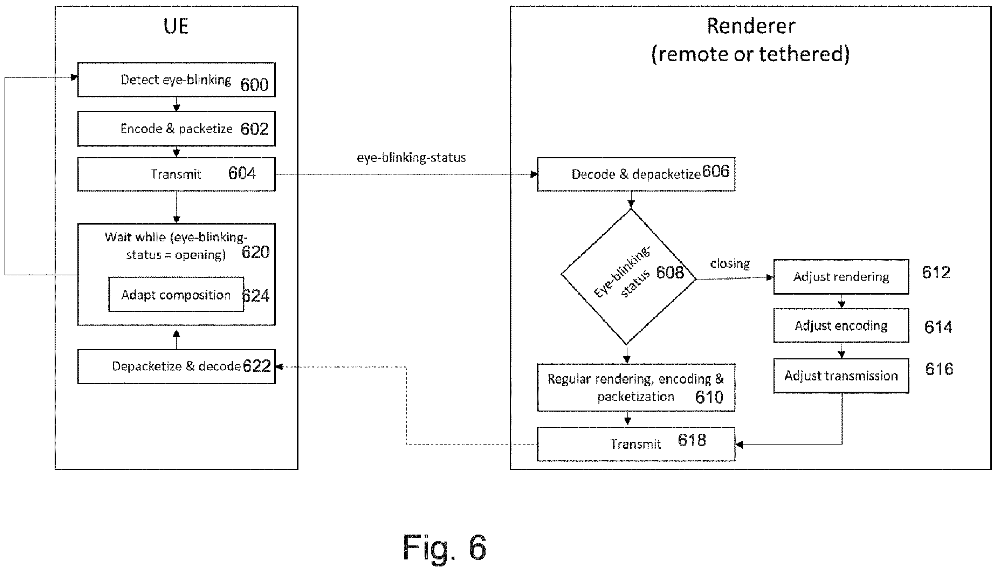

Some of the embodiments regarding the decision-making process for adjusting rendering, encoding and transmission can be illustrated by the flow chart of Figure 6. The viewing apparatus (UE) continuously monitors the eye-blinking status (600). The UE encodes and packetizes the media data (602) and transmits (604) the encoded media data with the eye-blinking status information to the rendering apparatus, which may comprise e.g. a split-rendering server or a tethered device.

The rendering apparatus depacketizes and decodes the media data (606) and reads the eye-blinking status information. Depending on the eye-blinking status (608), whether it indicates an open eye or closing/closed/opening eye, the rendering apparatus decides the actions to be taken: if the eye-blinking status indicates an open eye, the rendering apparatus performs regular rendering, encoding and packetization (610) to the media data; however, if the eye-blinking status indicates a closing/closed/opening eye, the rendering apparatus determines and performs at least one rendering optimization operation to be applied to the media data during the eye-blinking. The at least one rendering optimization operation may relate to adjusting rendering (612), encoding (614) and/or transmission (616). The rendering apparatus then transmits (618) either the regularly rendered media data or the media data with adjusted rendering back to the UE.

Meanwhile, the UE has paused the rendering process until the eye-blinking status indicates an opening eye and the rendered media data received from the rendering apparatus (620). The UE depacketizes and decodes the rendered media data (622) and the composition for the display is adapted according to the rendered media data received from the rendering apparatus (624).

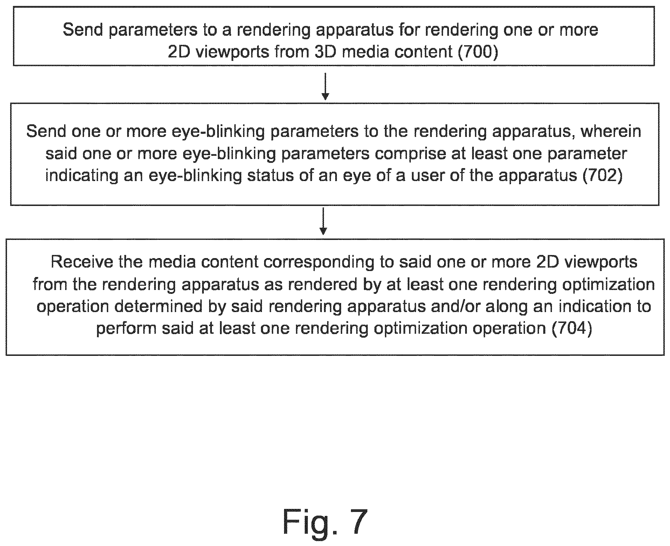

As becomes evident from above, a further aspect relates to the operation of a viewing device, such as an HMD, in split-rendering architecture. The operation may be illustrated by the flow chart of Figure 7, wherein the method comprises sending (700) parameters to a rendering apparatus for rendering one or more two-dimensional (2D) viewports from three-dimensional (3D) media content; sending (702), in or along said instructions, one or more eye-blinking parameters to the rendering apparatus, wherein said one or more eye-blinking parameters comprise at least one parameter indicating an eye-blinking status of an eye of a user of the apparatus; and receiving (704) the media content corresponding to said one or more 2D viewports from the rendering apparatus as rendered by at least one rendering optimization operation determined by said rendering apparatus and/or along an indication to perform said at least one rendering optimization operation.

According to an embodiment, the method comprises configuring said one or more eye-blinking parameters in a pose message.

According to an embodiment, the method comprises configuring said one or more eye-blinking parameters in one or more data structures describing pose information according to 3GPP split-rendering. Hence, the eye-blinking parameters may follow the syntax and semantics of the pose message syntax structures as defined in 3GPP 26.565.

The following table describes one example how the eye-blinking parameters may be added as last six parameters (' eyeInfo', 'eyesStatus', eyesStatistics', averageDuration', averageInterval', elapsedTime') in the pose message syntax structures as defined in 3GPP 26.565.

| Name | Type | Cardinality | Description |
|---|---|---|---|
| poseInfo | Object | 1..n | An array of pose information objects, each corresponding to a target display time and XR space. |
| displayTime | number | 1..1 | The time for which the current view poses are predicted. |
| xrSpace | number | 0..1 | An identifier for the XR space in which the view poses are expressed. The set of XR spaces are agreed on between the split rendering client and the split rendering server at the setup of the split rendering session.<br>The set of XR spaces is negotiated as part of the split rendering configuration as defined in clause 8.4.2.2. |

| Name | Type | Cardinality | Description |
|---|---|---|---|
| viewPoses | Object | 0..n | An array that provides a list of the poses associated with every view. The number of views is determined during the split rendering session setup between the split rendering client and server, depending on the view configuration of the XR session. |
| pose | Object | 1..1 | An object that carries the pose information for a particular view. |
| orientation | Object | 1..1 | Represents the orientation of the view pose as a quaternion based on the reference XR space. |
| x | number | 1..1 | Provides the x coordinate of the quaternion. |
| y | number | 1..1 | Provides the y coordinate of the quaternion. |
| z | number | 1..1 | Provides the z coordinate of the quaternion. |
| w | number | 1..1 | Provides the w coordinate of the quaternion. |
| position | Object | 0..1 | Represents the location in 3D space of the pose based on the reference XR space.<br>For eye gaze poses, the position is not required. |
| x | number | 1..1 | Provides the x coordinate of the position vector. |
| y | number | 1..1 | Provides the y coordinate of the position vector. |
| z | number | 1..1 | Provides the z coordinate of the position vector. |
| confidence | number | 0..1 | This optional parameter provides a confidence score that reflects the probability for this pose prediction to be correct. For the current pose or a pose in the past, the confidence value would be 1. The confidence can take a value between 0 and 1.<br>If not provided by the XR runtime, this field may be estimated by the SRC or omitted. |
| fov | Object | 1..1 | Indicates the four sides of the field of view used for the projection of the corresponding XR view. |
| angle Left | number | 1..1 | The angle of the left side of the field of view. For a symmetric field of view this value is negative. |
| angleRight | number | 1..1 | The angle of the right side of the field of view. |
| angleUp | number | 1..1 | The angle of the top part of the field of view. |
| angleDown | number | 1..1 | The angle of the bottom part of the field of view. For a symmetric field of view this value is negative. |
| eyesInfo | Object | 1..1 | An array of eye information objects corresponding to past and current eyes status for the viewer. |
| eyes Status | number | 1..1 | The current eyes status<br>0-> Eyes are open<br>1-> Eyes are closing<br>2-> Eyes are closed<br>3-> Eyes are opening |
| eyesStatistics | Object | 1..1 | The current viewer eyes statistics |
| averageDuration | number | 1... 3 | Array of average eyes duration for the viewer:<br>[1] ->average closing time<br>[2]->average closed time<br>[3]->average opening time |
| averageInterval | number | 1..1 | Average interval between two eye blinking |

(continued)

| Name | Type | Cardinality | Description |
|------|------|-------------|-------------|
| elapsedTime | Number | 0... n | Milliseconds since previous eyes open status |

It is noted that the above syntax and semantics of the eye-blinking parameters included in the pose message syntax structure is only one example of parameter implementation, and the skilled person appreciates that the same effect may be achieved by different configurations and naming conventions of the parameters.

According to an embodiment, the method comprises configuring said one or more eye-blinking parameters in a dedicated message.

A rendering apparatus according to an aspect comprises means for: receiving parameters from a viewing apparatus for rendering one or more two-dimensional (2D) viewports from three-dimensional (3D) media content; receiving, in or along said parameters, one or more eye-blinking parameters from the viewing apparatus, wherein said one or more eye-blinking parameters of the viewing apparatus comprise at least one parameter indicating an eye-blinking status of an eye of a user of the viewing apparatus; determining, in response to said at least one parameter indicating the eye-blinking status having a value referring to a detected eye-blinking, at least one rendering optimization operation to be applied to the media content during the eye-blinking; and delivering the media content corresponding to said one or more 2D viewports to the viewing apparatus as rendered by said at least one rendering optimization operation and/or along an indication to the viewing apparatus to perform said at least one rendering optimization operation.

An apparatus according to another aspect comprises means for: determining parameters for rendering one or more two-dimensional (2D) viewports from three-dimensional (3D) media content; determining one or more eye-blinking parameters, wherein said one or more eye-blinking parameters comprise at least one parameter indicating an eye-blinking status of an eye of a user; determining, in response to said at least one parameter indicating the eye-blinking status having a value referring to a detected eye-blinking, at least one rendering optimization operation to be applied to the media content during the eye-blinking; and rendering the media content corresponding to said one or more 2D viewports according to said at least one rendering optimization operation.

According to an embodiment, the apparatus may comprise means for estimating an eye-blinking time window, during which said at least one rendering optimization operation is applicable.

According to an embodiment, said estimating is based on one or more of the following:

- a timestamp of capturing the received eye-blinking status;
- the current time;
- an internal processing delay of the apparatus;
- an average delay between the apparatus and the viewing apparatus.

According to an embodiment, the parameters for rendering the one or more 2D viewports from 3D media content comprise one or more of the following:

- pose information;
- viewport parameters;
- further information for determining the rendering of the one or more 2D viewports.

According to an embodiment, the value of the eye-blinking status parameter referring to the detected eye-blinking is derived from at least one of the following conditions:

- the eye of the user of the viewing apparatus is closing;
- the eye of the user of the viewing apparatus closed;
- the eye of the user of the viewing apparatus is opening;
- the eye of the user of the viewing apparatus is open.

According to an embodiment, the apparatus comprises means for applying said at least one rendering optimization operation to rendering of the media content, encoding of the media content and/or transmission of the media content.

According to an embodiment, the apparatus comprises means for applying said at least one rendering optimization operation to one or more of the following rendering operations of the media content:

- not render a frame;

- reuse a previous frame;
- render a new frame with lower quality;
- render a new frame using rasterization;
- render a new frame using lower level of detail textures;
- render a new frame without applying tessellation or geometry shading;
- render a new frame while disabling particle effects.

According to an embodiment, the apparatus comprises means for applying said at least one rendering optimization operation to one or more of the following encoding operations of the media content:

- encode a zero motion-vector or a residual frame based on the last frame sent;
- cancel encoding of a frame;
- apply variable frame rate encoding;
- encode a frame at a lower bitrate;
- encode a frame at a lower resolution than the corresponding rendered frame;
- encode an SEI message indicating that no frame was rendered.

According to an embodiment, the apparatus comprises means for applying said at least one rendering optimization operation to one or more of the following transmission operations of the media content:

- not transmit anything;
- transmit the encoded video frame and/or the SEI message;
- transmit an empty frame and/or a corresponding SEI message;
- retransmit a previously encoded frame;
- transmit a message indicating that nothing has been rendered due to eye-blinking status;
- attribute a lower transmission priority to the frame;
- transmit a message for the viewing apparatus about a transmission time of the next frame.

According to an embodiment, the apparatus comprises means for configuring said one or more eye-blinking parameters in a pose message.

According to an embodiment, the apparatus comprises means for configuring said one or more eye-blinking parameters in one or more data structures describing pose information according to 3GPP split-rendering.

According to an embodiment, the apparatus comprises means for creating statistics on user's eye status; and estimating, based on said statistics, an eye closing duration or the next eye blinking occurrence.

An apparatus according to a further aspect comprises at least one processor and at least one memory, said at least one memory stored with computer program code thereon, the at least one memory and the computer program code configured to, with the at least one processor, cause the apparatus at least to perform: receive parameters from a viewing apparatus for rendering one or more two-dimensional (2D) viewports from three-dimensional (3D) media content; receive, in or along said parameters, one or more eye-blinking parameters from the viewing apparatus, wherein said one or more eye-blinking parameters of the viewing apparatus comprise at least one parameter indicating an eye-blinking status of an eye of a user of the viewing apparatus; determine, in response to said at least one parameter indicating the eye-blinking status having a value referring to a detected eye-blinking, at least one rendering optimization operation to be applied to the media content during the eye-blinking; and deliver the media content corresponding to said one or more 2D viewports to the viewing apparatus as rendered by said at least one rendering optimization operation and/or along an indication to the viewing apparatus to perform said at least one rendering optimization operation.

An apparatus according to a yet further aspect comprises at least one processor and at least one memory, said at least one memory stored with computer program code thereon, the at least one memory and the computer program code configured to, with the at least one processor, cause the apparatus at least to perform: determine parameters for rendering one or more two-dimensional (2D) viewports from three-dimensional (3D) media content; determine one or more eye-blinking parameters, wherein said one or more eye-blinking parameters comprise at least one parameter indicating an eye-blinking status of an eye of a user; determine, in response to said at least one parameter indicating the eye-blinking status having a value referring to a detected eye-blinking, at least one rendering optimization operation to be applied to the media content during the eye-blinking; and render the media content corresponding to said one or more 2D viewports according to said at least one rendering optimization operation.

According to an embodiment, the apparatus may comprise computer code configured to cause the apparatus to estimate an eye-blinking time window, during which said at least one rendering optimization operation is applicable.

According to an embodiment, said estimating is based on one or more of the following:

- a timestamp of capturing the received eye-blinking status;
- the current time;
- an internal processing delay of the apparatus;
- an average delay between the apparatus and the viewing apparatus.

According to an embodiment, the parameters for rendering the one or more 2D viewports from 3D media content comprise one or more of the following:

- pose information;
- viewport parameters;
- further information for determining the rendering of the one or more 2D viewports.

According to an embodiment, the value of the eye-blinking status parameter referring to the detected eye-blinking is derived from at least one of the following conditions:

- the eye of the user of the viewing apparatus is closing;
- the eye of the user of the viewing apparatus closed;
- the eye of the user of the viewing apparatus is opening;
- the eye of the user of the viewing apparatus is open.

According to an embodiment, the apparatus comprises computer code configured to cause the apparatus to apply said at least one rendering optimization operation to rendering of the media content, encoding of the media content and/or transmission of the media content.

According to an embodiment, the apparatus comprises computer code configured to cause the apparatus to apply said at least one rendering optimization operation to one or more of the following rendering operations of the media content:

- not render a frame;
- reuse a previous frame;
- render a new frame with lower quality;
- render a new frame using rasterization;
- render a new frame using lower level of detail textures;
- render a new frame without applying tessellation or geometry shading;
- render a new frame while disabling particle effects.

According to an embodiment, the apparatus comprises computer code configured to cause the apparatus to apply said at least one rendering optimization operation to one or more of the following encoding operations of the media content:

- encode a zero motion-vector or a residual frame based on the last frame sent;
- cancel encoding of a frame;
- apply variable frame rate encoding;
- encode a frame at a lower bitrate;
- encode a frame at a lower resolution than the corresponding rendered frame;
- encode an SEI message indicating that no frame was rendered.

According to an embodiment, the apparatus comprises computer code configured to cause the apparatus to apply said at least one rendering optimization operation to one or more of the following transmission operations of the media content:

- not transmit anything;
- transmit the encoded video frame and/or the SEI message;
- transmit an empty frame and/or a corresponding SEI message;
- retransmit a previously encoded frame;
- transmit a message indicating that nothing has been rendered due to eye-blinking status;
- attribute a lower transmission priority to the frame;
- transmit a message for the viewing apparatus about a transmission time of the next frame.

According to an embodiment, the apparatus comprises computer code configured to cause the apparatus to configure said one or more eye-blinking parameters in a pose message.

According to an embodiment, the apparatus comprises computer code configured to cause the apparatus to configure said one or more eye-blinking parameters in one or more data structures describing pose information according to 3GPP split-rendering.

According to an embodiment, the apparatus comprises computer code configured to cause the apparatus to create statistics on user's eye status; and estimate, based on said statistics, an eye closing duration or the next eye blinking occurrence.

A viewing apparatus according to an aspect comprises means for: sending parameters to a rendering apparatus for rendering one or more two-dimensional (2D) viewports from three-dimensional (3D) media content; sending, in or along said instructions, one or more eye-blinking parameters to the rendering apparatus, wherein said one or more eye-blinking parameters comprise at least one parameter indicating an eye-blinking status of an eye of a user of the apparatus; and receiving the media content corresponding to said one or more 2D viewports from the rendering apparatus as rendered by at least one rendering optimization operation determined by said rendering apparatus and/or along an indication to perform said at least one rendering optimization operation.

A viewing apparatus according to a further aspect comprises at least one processor and at least one memory, said at least one memory stored with computer program code thereon, the at least one memory and the computer program code configured to, with the at least one processor, cause the apparatus at least to perform: send parameters to a rendering apparatus for rendering one or more two-dimensional (2D) viewports from three-dimensional (3D) media content; send, in or along said instructions, one or more eye-blinking parameters to the rendering apparatus, wherein said one or more eye-blinking parameters comprise at least one parameter indicating an eye-blinking status of an eye of a user of the apparatus; and receive the media content corresponding to said one or more 2D viewports from the rendering apparatus as rendered by at least one rendering optimization operation determined by said rendering apparatus and/or along an indication to perform said at least one rendering optimization operation.

Such apparatuses may comprise e.g. the functional units disclosed in any of the Figures 1, 2 and 6 for implementing the embodiments.

A further aspect relates to a computer program product, stored on a non-transitory memory medium, comprising computer program code, which when executed by at least one processor, causes an apparatus at least to perform: receive parameters from a viewing apparatus for rendering one or more two-dimensional (2D) viewports from three-dimensional (3D) media content; receive, in or along said parameters, one or more eye-blinking parameters from the viewing apparatus, wherein said one or more eye-blinking parameters of the viewing apparatus comprise at least one parameter indicating an eye-blinking status of an eye of a user of the viewing apparatus; determine, in response to said at least one parameter indicating the eye-blinking status having a value referring to a detected eye-blinking, at least one rendering optimization operation to be applied to the media content during the eye-blinking; and deliver the media content corresponding to said one or more 2D viewports to the viewing apparatus as rendered by said at least one rendering optimization operation and/or along an indication to the viewing apparatus to perform said at least one rendering optimization operation.

A computer program product according to a yet further aspect, stored on a non-transitory memory medium, comprising computer program code, which when executed by at least one processor, causes an apparatus at least to perform: determine parameters for rendering one or more two-dimensional (2D) viewports from three-dimensional (3D) media content; determine one or more eye-blinking parameters, wherein said one or more eye-blinking parameters comprise at least one parameter indicating an eye-blinking status of an eye of a user; determine, in response to said at least one parameter indicating the eye-blinking status having a value referring to a detected eye-blinking, at least one rendering optimization operation to be applied to the media content during the eye-blinking; and render the media content corresponding to said one or more 2D viewports according to said at least one rendering optimization operation.

A computer program product according to a yet further aspect, stored on a non-transitory memory medium, comprising computer program code, which when executed by at least one processor, causes an apparatus at least to perform: send parameters to a rendering apparatus for rendering one or more two-dimensional (2D) viewports from three-dimensional (3D) media content; send, in or along said instructions, one or more eye-blinking parameters to the rendering apparatus, wherein said one or more eye-blinking parameters comprise at least one parameter indicating an eye-blinking status of an eye of a user of the apparatus; and receive the media content corresponding to said one or more 2D viewports from the rendering apparatus as rendered by at least one rendering optimization operation determined by said rendering apparatus and/or along an indication to perform said at least one rendering optimization operation.

According to an embodiment, any of the above computer program products can be embodied on a non-transitory computer readable medium. According to another embodiment, the computer program products can be downloaded over a network in a data packet.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

**Claims**

1. An apparatus comprising means for:

   receiving parameters from a viewing apparatus for rendering one or more two-dimensional (2D) viewports from three-dimensional (3D) media content;
   receiving, in or along with said parameters, one or more eye-blinking parameters from the viewing apparatus, wherein said one or more eye-blinking parameters of the viewing apparatus comprise at least one parameter indicating an eye-blinking status of an eye of a user of the viewing apparatus;
   determining, in response to said at least one parameter indicating the eye-blinking status having a value referring to a detected eye-blinking, at least one rendering optimization operation to be applied to the media content during the eye-blinking; and
   delivering the 3D media content corresponding to said one or more 2D viewports to the viewing apparatus as rendered by said at least one rendering optimization operation and/or along with an indication to the viewing apparatus to perform said at least one rendering optimization operation.

2. An apparatus comprising means for:

   determining parameters for rendering one or more two-dimensional (2D) viewports from three-dimensional (3D) media content;
   determining one or more eye-blinking parameters, wherein said one or more eye-blinking parameters comprise at least one parameter indicating an eye-blinking status of an eye of a user;
   determining, in response to said at least one parameter indicating the eye-blinking status having a value referring to a detected eye-blinking, at least one rendering optimization operation to be applied to the media content during the eye-blinking; and
   rendering the 3D media content corresponding to said one or more 2D viewports according to said at least one rendering optimization operation.

3. The apparatus according to claim 1 or 2, comprising means for:
   estimating an eye-blinking time window, during which said at least one rendering optimization operation is applicable.

4. The apparatus according to claim 3, wherein said estimating is based on one or more of the following:

   - a timestamp of capturing the received eye-blinking status;
   - the current time;
   - an internal processing delay of the apparatus;
   - an average delay between the apparatus and the viewing apparatus.

5. The apparatus according to any preceding claim, wherein the parameters for rendering the one or more 2D viewports from 3D media content comprise one or more of the following:

   - pose information;
   - viewport parameters;
   - further information for determining the rendering of the one or more 2D viewports.

6. The apparatus according to any preceding claim, wherein the value of the eye-blinking status parameter referring to the detected eye-blinking is derived from at least one of the following conditions:

   - the eye of the user of the viewing apparatus is closing;
   - the eye of the user of the viewing apparatus closed;
   - the eye of the user of the viewing apparatus is opening;
   - the eye of the user of the viewing apparatus is open.

7. The apparatus according to any preceding claim, comprising means for
   applying said at least one rendering optimization operation to rendering of the media content, encoding of the media content and/or transmission of the media content.

8. The apparatus according to claim 7, comprising means for applying said at least one rendering optimization operation to one or more of the following rendering operations of the media content:

   - not render a frame;
   - reuse a previous frame;
   - render a new frame with lower quality;
   - render a new frame using rasterization;
   - render a new frame using lower level of detail textures;
   - render a new frame without applying tessellation or geometry shading;
   - render a new frame while disabling particle effects.

9. The apparatus according to claim 7, comprising means for applying said at least one rendering optimization operation to one or more of the following encoding operations of the media content:

   - encode a zero motion-vector or a residual frame based on the last frame sent;
   - cancel encoding of a frame;
   - apply variable frame rate encoding;
   - encode a frame at a lower bitrate;
   - encode a frame at a lower resolution than the corresponding rendered frame;
   - encode an SEI message indicating that no frame was rendered.

10. The apparatus according to claim 7, comprising means for applying said at least one rendering optimization operation to one or more of the following transmission operations of the media content:

    - not transmit anything;
    - transmit the encoded video frame and/or the SEI message;
    - transmit an empty frame and/or a corresponding SEI message;
    - retransmit a previously encoded frame;
    - transmit a message indicating that nothing has been rendered due to eye-blinking status;
    - attribute a lower transmission priority to the frame;
    - transmit a message for the viewing apparatus about a transmission time of the next frame.

11. The apparatus according to any preceding claim, comprising means for
    configuring said one or more eye-blinking parameters in a pose message.

12. The apparatus according to claim 11, comprising means for
    configuring said one or more eye-blinking parameters in one or more data structures describing pose information according to 3GPP split-rendering.

13. The apparatus according to any preceding claim, comprising means for

creating statistics on user's eye status; and
estimating, based on said statistics, an eye closing duration or the next eye blinking occurrence.

14. An apparatus comprising means for:

sending parameters to a rendering apparatus for rendering one or more two-dimensional (2D) viewports from three-dimensional (3D) media content;
sending, in or along with said parameters, one or more eye-blinking parameters to the rendering apparatus, wherein said one or more eye-blinking parameters comprise at least one parameter indicating an eye-blinking status of an eye of a user of the apparatus; and
receiving the 3D media content corresponding to said one or more 2D viewports from the rendering apparatus as rendered by at least one rendering optimization operation determined by said rendering apparatus and/or along an indication to perform said at least one rendering optimization operation.

15. A method, comprising:

determining parameters for rendering one or more two-dimensional (2D) viewports from three-dimensional (3D) media content;
determining one or more eye-blinking parameters, wherein said one or more eye-blinking parameters comprise at least one parameter indicating an eye-blinking status of an eye of a user;
determining, in response to said at least one parameter indicating the eye-blinking status having a value referring to a detected eye-blinking, at least one rendering optimization operation to be applied to the media content during the eye-blinking; and
rendering the 3D media content corresponding to said one or more 2D viewports according to said at least one rendering optimization operation.

Fig. 1

Fig. 2

Receive parameters from a viewing apparatus for rendering one or more
2D viewports from 3D media content (300)

Receive one or more eye-blinking parameters from the viewing apparatus, wherein
said one or more eye-blinking parameters of the viewing apparatus comprise
at least one parameter indicating an eye-blinking status of an eye of a user of
the viewing apparatus (302)

Determine, in response to said at least one parameter indicating the eye-blinking status
having a value referring to a detected eye-blinking, at least one rendering optimization
operation to be applied to the media content during the eye-blinking (304)

Deliver the media content corresponding to said one or more 2D viewports
to the viewing apparatus as rendered by said at least one rendering optimization
operation and/or along an indication to the viewing apparatus to perform
said at least one rendering optimization operation (306)

Fig. 3

Determine parameters for rendering one or more 2D viewports
from 3D media content (400)

↓

Determine one or more eye-blinking parameters, wherein
said one or more eye-blinking parameters of the viewing apparatus comprise
at least one parameter indicating an eye-blinking status of an eye of a user (402)

↓

Determine, in response to said at least one parameter indicating the eye-blinking status
having a value referring to a detected eye-blinking, at least one rendering
optimization operation to be applied to the media content during the eye-blinking (404)

↓

Render the media content corresponding to said one or more 2D viewports
according to said at least one rendering optimization operation (406)

# Fig. 4

Possible sleep period (34ms)

Uplink-delay (15ms)  Downlink + rendering delay (51ms)

Eye blink (100ms)

Blink start

New frame
rendering
needs to
start

New frame
needed

Server is
notified that
eyes are
closed

## Fig. 5a

Uplink-delay (15ms)  Downlink + rendering delay (51ms)

Eye blink (100ms)

Blink start

New frame
rendering
needs to
start

New frame
needed

Server is
notified that
eyes are
closed

## Fig. 5b

Possible sleep period (34ms)

Downlink + rendering delay (51ms)

Uplink-delay (15ms)

Eye blirk (100ms)

Blink start

Server is notified that eyes are closed

New frame rendering needs to start

New frame needed

Fig. 5c

EP 4 589 413 A1

**UE**

Detect eye-blinking 600

Encode & packetize 602

Transmit 604

Wait while (eye-blinking-status = opening) 620

Adapt composition 624

Depacketize & decode 622

**Renderer (remote or tethered)**

eye-blinking-status

Decode & depacketize 606

Eye-blinking-status 608

closing

Adjust rendering 612

Adjust encoding 614

Adjust transmission 616

Regular rendering, encoding & packetization 610

Transmit 618

Fig. 6

Send parameters to a rendering apparatus for rendering one or more 2D viewports from 3D media content (700)

↓

Send one or more eye-blinking parameters to the rendering apparatus, wherein said one or more eye-blinking parameters comprise at least one parameter indicating an eye-blinking status of an eye of a user of the apparatus (702)

↓

Receive the media content corresponding to said one or more 2D viewports from the rendering apparatus as rendered by at least one rendering optimization operation determined by said rendering apparatus and/or along an indication to perform said at least one rendering optimization operation (704)

# Fig. 7

Europäisches
Patentamt

European
Patent Office

Office européen
des brevets

# EUROPEAN SEARCH REPORT

Application Number

EP 25 15 0929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/178408 A1 (BAVOR JR CLAYTON WOODWARD [US] ET AL) 22 June 2017 (2017-06-22) * paragraph [0083] - paragraph [0089]; figure 8 * | 1-15 | INV. G06F3/01 |
| X | US 2017/285736 A1 (YOUNG ANDREW [US] ET AL) 5 October 2017 (2017-10-05) * paragraph [0035] - paragraph [0049] * | 1,2,14, 15 | |
| A | | 3-13 | |

TECHNICAL FIELDS
SEARCHED       (IPC)

G06F

The present search report has been drawn up for all claims

| Place of search | Date of completion of the search | Examiner |
|---|---|---|
| The Hague | 20 March 2025 | Tengs, Ingrid |

EPO FORM 1503 03.82 (P04C01)

## ANNEX TO THE EUROPEAN SEARCH REPORT
## ON EUROPEAN PATENT APPLICATION NO.

EP 25 15 0929

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | | Publication date |
|---|---|---|---|---|
| US 2017178408 A1 | 22-06-2017 | AU | 2016378555 A1 | 22-03-2018 |
| | | CA | 2998904 A1 | 29-06-2017 |
| | | CN | 108140262 A | 08-06-2018 |
| | | CN | 114758045 A | 15-07-2022 |
| | | EP | 3394835 A2 | 31-10-2018 |
| | | JP | 6732893 B2 | 29-07-2020 |
| | | JP | 7095030 B2 | 04-07-2022 |
| | | JP | 2019507509 A | 14-03-2019 |
| | | JP | 2020174384 A | 22-10-2020 |
| | | KR | 20180039723 A | 18-04-2018 |
| | | KR | 20200027060 A | 11-03-2020 |
| | | US | 2017178408 A1 | 22-06-2017 |
| | | US | 2019206139 A1 | 04-07-2019 |
| | | WO | 2017112692 A2 | 29-06-2017 |
| US 2017285736 A1 | 05-10-2017 | US | 2017285736 A1 | 05-10-2017 |
| | | US | 2019361526 A1 | 28-11-2019 |
| | | US | 2020301506 A1 | 24-09-2020 |
| | | US | 2021303067 A1 | 30-09-2021 |
| | | US | 2022197381 A1 | 23-06-2022 |
| | | US | 2024103620 A1 | 28-03-2024 |
| | | US | 2025053236 A1 | 13-02-2025 |

EPO FORM P0459

For more details about this annex : see Official Journal of the European Patent Office, No. 12/82